# EUROPEAN PATENT APPLICATION

(11) **EP 4 717 325 A2**
(43) Date of publication of application: **01.04.2026**
(21) Application number: 25192620.0
(22) Date of filing: 29.07.2025
(51) Int. Cl.: A62C 3/16, A62C 33/06, H01M 10/613, H01M 10/65, H01M 50/289, H01M 50/291, H01M 50/383, A62C 3/07

(54) **ENERGY STORAGE DEVICE**

(30) Priority: 27.09.2024 KR 20240131340
(71) Applicant: SAMSUNG SDI CO., LTD., Yongin-si, Gyeonggi-do 17084 (KR)
(72) Inventor: LEE, Jeongmin, 17084 Yongin-si (KR); YANG, Jongwoon, 17084 Yongin-si (KR); KIM, Sootaek, 17084 Yongin-si (KR)
(74) Representative: Marks & Clerk LLP

(57) **Abstract**

An energy storage device (100) including one or more battery modules including a plurality of battery cells (260); a case (200) accommodating the battery module; a fire extinguishing pipe (300) disposed in the case, having one side open to accommodate a fire extinguishing agent (310) therein, and configured to melt at a certain temperature or higher to spray the fire extinguishing agent; and a connection portion (400) coupled to the case, having one end connected to the opened one side of the fire extinguishing pipe, and having the other end connected to a supply flow path (10) supplying the fire extinguishing agent.

## Description

### FIELD

Aspects of embodiments of the present disclosure relate to an energy storage device.

### BACKGROUND

An energy storage system (ESS) is a system configured to store generated electrical energy using lithium-ion batteries or the like and to provide stored energy for use in a case of being needed. Through the implementation of ESS, energy utilization has become more efficient across all stages of power generation, transmission, substation, distribution, and consumption. As a result, it is possible to use more even power in renewable energy generation such as solar and wind power generation.

The above information disclosed in this Background section is for enhancement of understanding of the background of the present disclosure, and therefore, it may contain information that does not constitute related (or prior) art.

### SUMMARY

Aspects of embodiments of the present disclosure provide an energy storage device.

These and other aspects and features of the present disclosure will be described in or will be apparent from the following description of embodiments of the present disclosure.

According to one or more embodiments of the present disclosure, an energy storage device may include one or more battery modules including a plurality of battery cells, a case accommodating the one or more battery modules, a fire extinguishing pipe that may be disposed in the case, may have one side open to accommodate a fire extinguishing agent therein, and may melt at a certain temperature or higher to spray the fire extinguishing agent, and a connection portion that may be coupled to the case, may have one end connected to the one side of the fire extinguishing pipe, and may have another end connected to a supply flow path supplying the fire extinguishing agent.

In some embodiments, the connection portion may include a base plate coupled to the case, a pipe connection portion extending from the base plate to one side and to which the fire extinguishing pipe may be coupled, and a flow path connection portion that extends from the base plate to the other side and communicates with the pipe connection portion and to which the supply flow path may be connected.

In some embodiments, the pipe connection portion may include a plurality of latching protrusions extending radially outward from an outer surface thereof and formed along an axial direction.

In some embodiments, each latching protrusion may be formed to be inclined upward in a direction in which the fire extinguishing pipe may be inserted.

In some embodiments, the energy storage device may further include a cover portion disposed to surround one side of the fire extinguishing pipe coupled to the pipe connection portion.

In some embodiments, the cover portion may include a plurality of latching grooves that may be recessed radially outward from an inner surface thereof and may be formed along an axial direction.

In some embodiments, each latching groove may be formed to have a shape corresponding to a respective latching protrusion and may be supported by the latching protrusion with the fire extinguishing pipe interposed therebetween.

In some embodiments, a length of the cover portion may be longer than that of the pipe connection portion.

In some embodiments, the case may include a pipe coupling portion into which the pipe connection portion may be inserted and to which the base plate may be coupled.

In some embodiments, a length of the cover portion may be equal to or longer than that of the pipe coupling portion, in a direction in which the pipe connection portion may be inserted.

In some embodiments, a length of the pipe connection portion may be equal to or longer than that of the pipe coupling portion, in a direction in which the pipe connection portion may be inserted.

In some embodiments, the cover portion may have a higher strength than the fire extinguishing pipe and may be made of a flame-retardant material.

In some embodiments, the flow path connection portion may include a support portion that extends radially outward from an outer surface thereof and into which the supply flow path may be inserted to be supported.

In some embodiments, the fire extinguishing pipe may be spaced apart from a side surface of the battery module by a predetermined distance to be disposed in a length direction of the case.

In some embodiments, a melting temperature of the fire extinguishing pipe, which may be the certain temperature at which the fire extinguishing pipe melts, may correspond to an ignition temperature of the battery cells.

In some embodiments, the energy storage device may further include a front thermal insulation sheet disposed between adjacent battery cells among the plurality of battery cells.

In some embodiments, the one or more battery modules may include a first battery module and a second battery module, the first battery module and the second battery module may be disposed adjacent to each other in a width direction of the case, and the fire extinguishing pipe may be disposed between the first and second battery modules.

In some embodiments, the energy storage device may further include a first side thermal insulation sheet disposed between the first battery module and the fire extinguishing pipe and a second side thermal insulation sheet disposed between the second battery module and the fire extinguishing pipe.

In some embodiments, the energy storage device may further include a thermal insulation portion disposed between the first battery module and the second battery module.

In some embodiments, the thermal insulation portion may include a plurality of through-holes formed at positions where a plurality of battery cells of the first battery module and a plurality of battery cells of the second battery module face each other.

According to some embodiments of the present disclosure, a supply flow path for supplying the fire extinguishing agent to the energy storage device is connected to the fire extinguishing pipe through a connection portion coupled to a case, so that the fire extinguishing agent may be smoothly supplied to the fire extinguishing pipe.

According to some embodiments of the present disclosure, a cover portion is disposed at a portion where the connection portion and the fire extinguishing pipe are connected, thereby preventing damage to the portion where the connection portion and the fire extinguishing pipe are connected.

According to some embodiments of the present disclosure, the length of the portion where the connection portion and the fire extinguishing pipe are connected may be formed longer, thereby improving a coupling force between the connection portion and the fire extinguishing pipe.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of an example of an energy storage device according to some embodiments of the present disclosure.
FIG. 2 illustrates an exploded perspective view of an example of an energy storage device according to some embodiments of the present disclosure.
FIG. 3 illustrates a perspective view of an example in which a battery module is disposed within a case in an energy storage device according to some embodiments of the present disclosure.
FIG. 4 illustrates a perspective view of an example in which a fire extinguishing pipe sprays a fire extinguishing agent in an energy storage device according to some embodiments of the present disclosure.
FIG. 5 illustrates a perspective view of an example in which an insulation member is disposed in an energy storage device according to some embodiments of the present disclosure.
FIG. 6 illustrates a perspective view of an example of a connection portion and a cover portion in an energy storage device according to some embodiments of the present disclosure.
FIG. 7 illustrates an exploded top plan view of an example of a connection portion and a cover portion in an energy storage device according to some embodiments of the present disclosure.
FIG. 8 and FIG. 9 each respectively illustrate an exploded top plan view of an example in which a cover portion is coupled to a connection portion in an energy storage device according to some embodiments of the present disclosure.
FIG. 10 illustrates a partial cross-sectional view of an example of an energy storage device according to some embodiments of the present disclosure.
FIG. 11 illustrates an enlarged view of an example of area A of FIG. 10.
FIG. 12 illustrates a top plan view of another example of a connection portion in an energy storage device according to some embodiments of the present disclosure.
FIG. 13 illustrates an enlarged view of an example of a state in which the connection portion of FIG. 12 is installed.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

An energy storage device according to some embodiments of the present disclosure may include a battery pack.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, overcharge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle or the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

Hereinafter, an energy storage device according to some embodiments of the present disclosure will be described in detail with reference to the drawings. In some embodiments the energy storage device may further include the configurations described above, although the description thereof is omitted below.

A battery pack used in an ESS may include a plurality of lithium-ion batteries. Lithium-ion batteries have high energy efficiency but have a higher risk of fire than nickel-cadmium batteries or nickel-hydrogen batteries, and incidents of lithium-ion ESS fires have occurred domestically and internationally. Therefore, a lithium-ion ESS needs to be equipped with fire extinguishing equipment to suppress fire.

Conventional fire extinguishing equipment uses a method of installing fire extinguishing pipes that supply fire extinguishing agents directly between batteries to suppress fires. The fire extinguishing pipe may be connected to a supply flow path supplying the fire extinguishing agent through a connection pipe to receive the fire extinguishing agent. However, in the event of a battery fire, the front end of the fire extinguishing pipe connected to the connection pipe may break or melt in advance, blocking the supply of fire extinguishing agent to the fire extinguishing pipe and preventing the spraying of the fire extinguishing agent.

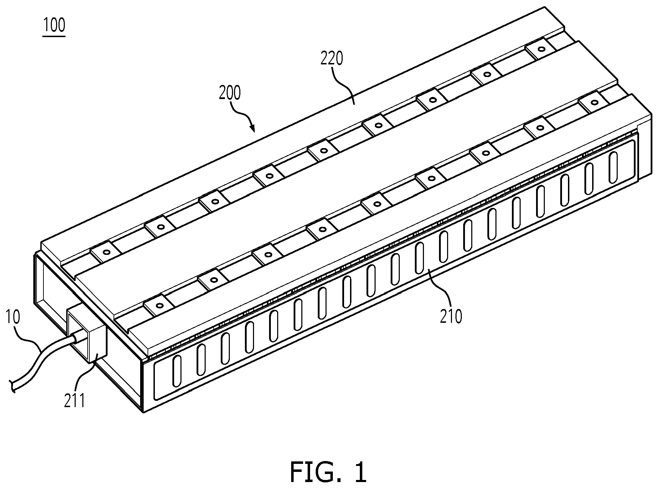

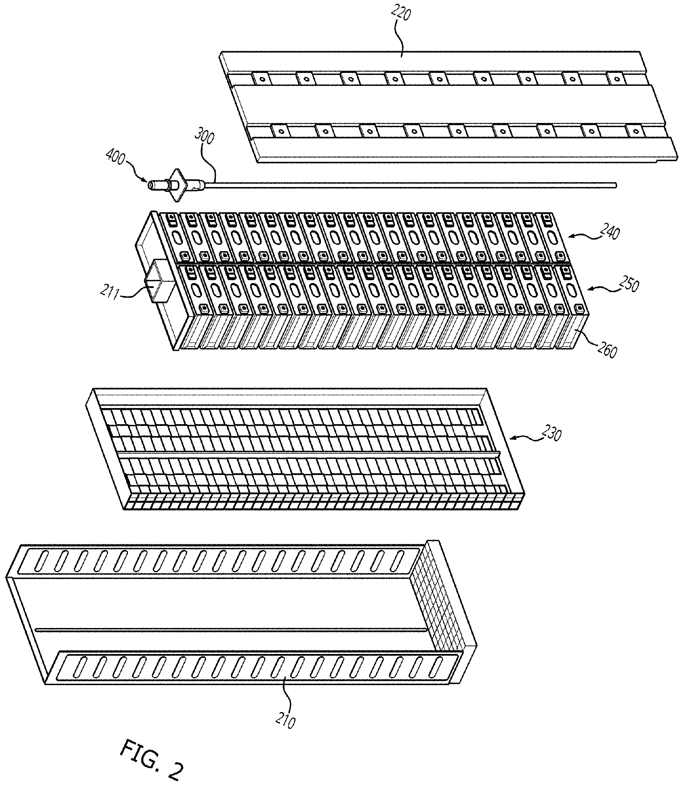

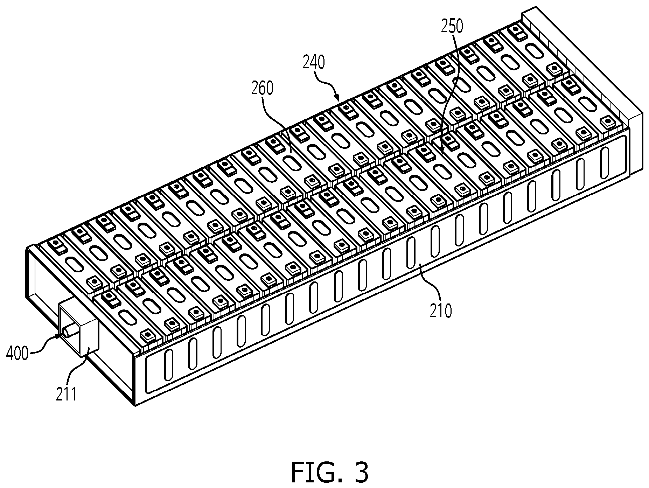

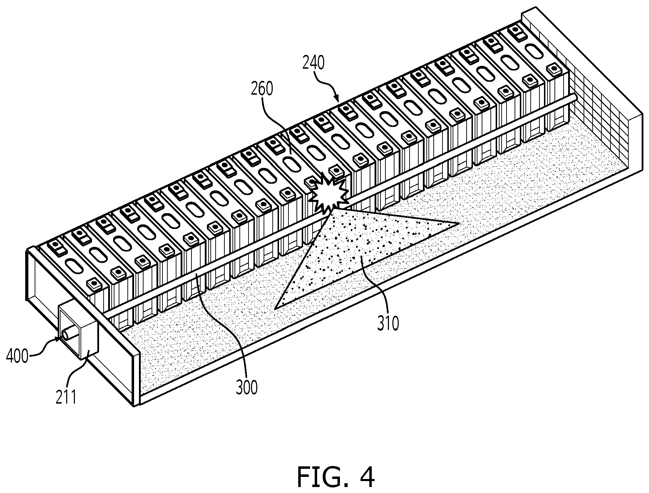

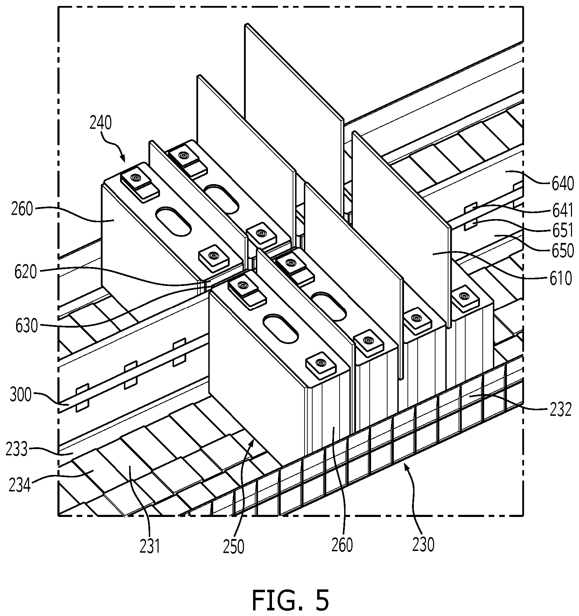

FIG. 1 illustrates a perspective view of an example of an energy storage device according to some embodiments of the present disclosure. FIG. 2 illustrates an exploded perspective view of an example of an energy storage device according to some embodiments of the present disclosure. FIG. 3 illustrates a perspective view of an example in which a battery module is disposed within a case in an energy storage device according to some embodiments of the present disclosure. FIG. 4 illustrates a perspective view of an example in which a fire extinguishing pipe sprays a fire extinguishing agent in an energy storage device according to some embodiments of the present disclosure. FIG. 5 illustrates a perspective view of an example in which an insulation member is disposed in an energy storage device according to some embodiments of the present disclosure.

Referring to FIG. 1 to FIG. 5, an energy storage device 100 according to some embodiments of the present disclosure may include one or more battery modules including a plurality of battery cells 260, a case 200 that accommodates the battery module, a fire extinguishing pipe 300 disposed within the case 200, and a connection portion 400 coupled to the case 200 and connecting the fire extinguishing pipe 300 to a supply flow path 10 for supplying a fire extinguishing agent.

The case 200 may include a case body 210 accommodating the battery module and a case cover 220 that seals the case body 210 that accommodates the battery module.

The battery module may be configured of a plurality of stacked battery cells 260. While the drawings illustrate prismatic battery cells 260, the present disclosure is not limited thereto, and cylindrical or pouch-type battery cells may also be applied.

The battery module may be configured so that the battery cells 260 are disposed parallel to each other along the longitudinal direction (X) of the case body 210. In some embodiments, the battery module may include a first battery module 240 and a second battery module 250. The first and second battery modules 240, 250 may be spaced apart at a predetermined interval and disposed adjacent to each other along the width direction (Y) of the case body 210. However, the number of battery modules is not limited thereto, and one or three or more battery modules may be provided.

The fire extinguishing pipe 300 may be disposed along the longitudinal direction (X) of the case 200 at a predetermined interval (distance) from the side of the battery module. One side of the fire extinguishing pipe 300 may be open to receive a fire extinguishing agent 310 and the other side thereof may be formed to have a sealed pipe shape so that the fire extinguishing agent 310 may be accommodated therein. In some embodiments, the fire extinguishing pipe 300 may be disposed between the first battery module 240 and the second battery module 250 to spray the fire extinguishing agent 310 onto the first battery module 240 and/or the second battery module 250.

The fire extinguishing pipe 300 may be melted at a predetermined temperature or higher to spray the fire extinguishing agent 310 toward the battery module. For this purpose, the melting temperature of the fire extinguishing pipe 300 may correspond to the ignition temperature of the battery cells 260. For example, in a case where the battery cell 260 ignites due to thermal runaway, as the heat of ignition is transmitted to the fire extinguishing pipe 300, the fire extinguishing pipe 300 on the side of the ignited battery cell 260 may melt. In some embodiments, the melting temperature of the fire extinguishing pipe 300 may be set to be between 80°C to 300°C (including 80°C and 300°C). The melted fire extinguishing pipe 300 may spray the fire extinguishing agent 310 stored therein to the outside to extinguish the ignited battery cell 260. The cooling effect of the fire extinguishing agent 310 discharged in a case where the battery cell 260 ignites may prevent thermal runaway transfer to adjacent battery cells.

The type of fire extinguishing agent 310 is not limited as long as it may extinguish a fire caused by thermal runaway of a battery cell 260. In some embodiments, it may be composed of solids, liquids, and gases having a cooling effect. Gaseous extinguishing agents may include carbon dioxide extinguishing agents and halogen extinguishing agents. Solid fire extinguishing agents may include phosphate fire extinguishing agents and bicarbonate fire extinguishing agents. Liquid fire extinguishing agents may include acid-alkali fire extinguishing agents, strengthened liquid fire extinguishing agents, and foam fire extinguishing agents. For example, it may include at least one of heptafluoropropane, a water-based extinguishing agent for cooling extinguishment, Novec or 1,1,1,2,3,3,3-hexafluoropropane. To prevent thermal runaway propagation, the fire extinguishing agent corresponding thereto may be selected according to the capacity and type of the battery cell.

The material of the fire extinguishing pipe 300 may be a material that may melt at the ignition temperature of the battery cell 260 or the surface temperature of the battery cell 260 at which ignition occurs. In some embodiments, the material of the fire extinguishing pipe 300 may include at least one of polypropylene (PP), linear low density polyethylene (LLDPE), polyvinyl chloride (PVC), polyamide 6 (PA6), or polyamide 66 (PA66).

The energy storage device 100 according to some embodiments of the present disclosure may further include a thermal insulation member. The thermal insulation member may be disposed between battery cells to thermally isolate adjacent battery cells and prevent heat transfer from an ignited battery cell.

The thermal insulation member may include at least one of fiber, refractory material, or reinforced polymer. In some embodiments, the thermal insulation member may include at least one of mica (MICA), aerogel, or fiber ceramic paper. The thermal insulation member may be made of any material as long as it may block heat of a battery cell in which thermal runaway occurs from being transferred to adjacent battery cells.

In some embodiments, the thermal insulation member may include a front thermal insulation sheet 610 disposed between adjacent battery cells among the battery cells 260, a first side thermal insulation sheet 620 disposed between the first battery module 240 and the fire extinguishing pipe 300, a second side thermal insulation sheet 630 disposed between the second battery module 250 and the fire extinguishing pipe 300, and a thermal insulation portion disposed between the first battery module 240 and the second battery module 250.

The thermal insulation portion may include an upper thermal insulation portion 640 disposed above the fire extinguishing pipe 300 between the first battery module 240 and the second battery module 250 and a lower thermal insulation portion 650 disposed under the fire extinguishing pipe 300. With this configuration, the fire extinguishing pipe 300 may be disposed between the first side thermal insulation sheet 620, the second side thermal insulation sheet 630, the upper thermal insulation portion 640, and the lower thermal insulation portion 650.

The thermal insulation portion may further include a plurality of through-holes formed at positions where the battery cells of the first battery module 240 and the battery cells of the second battery module 250 face each other. The through-holes may include an upper through-hole 641 formed in the upper thermal insulation portion 640 and a lower through-hole 651 formed in the lower thermal insulation portion 650. The upper through-hole 641 and the lower through-hole 651 may be formed to face each other with the fire extinguishing pipe 300 interposed therebetween. Additionally, the upper through-hole 641 and lower through-hole 651 may be formed to penetrate toward the fire extinguishing pipe 300. With this configuration, in some embodiments where the fire extinguishing pipe 300 is melted and the fire extinguishing agent 310 is sprayed, the upper through-hole 641 and the lower through-hole 651 are formed in the upper thermal insulation portion 640 and the lower thermal insulation portion 650, so that the fire extinguishing agent 310 may be sprayed in the height direction of the battery cell 260 without interference. In some embodiments, because the upper through-hole 641 and the lower through-hole 651 are disposed at the sides of the battery cell 260, in a case where the fire extinguishing pipe 300 is melted to spray the fire extinguishing agent 310, the fire extinguishing agent 310 may be intensively sprayed on the battery cell 260.

The energy storage device 100 according to some embodiments of the present disclosure may further include a lower panel 230 disposed between the case body 210 and the battery module. The lower panel 230 may be configured to block the fire extinguishing agent 310 sprayed from the melted fire extinguishing pipe 300 from being discharged to the outside of the case body 210.

In some embodiments, the lower panel 230 may include a panel body 231 disposed between the case body 210 and the battery module, a side wall portion 232 protruding in a vertical direction along the periphery of the panel body 231 and covering the side surface of the battery cell 260, a first guide portion 233 protruding in a vertical direction from the central area of the panel body 231 and disposed between the first battery module 240 and the second battery module 250, and a second guide portion 234 protruding in a width direction (Y) from the panel body 231 to form a flow path so that the fire extinguishing agent 310 moves.

The first guide portion 233 may form a flow path along the longitudinal direction (X) of the panel body 231 to guide the movement of the fire extinguishing agent 310 discharged from the fire extinguishing pipe 300. The fire extinguishing agent 310 discharged from the fire extinguishing pipe 300 may fall onto the panel body 231 after extinguishing the battery cell in which the fire has occurred, and may flow along the first guide portion 233 in the longitudinal direction (X) of the panel body 231 to prevent thermal runaway from being transferred to adjacent battery cells.

The second guide portion 234 may form a flow path along the width direction (Y) of the panel body 231 to guide the movement of the fire extinguishing agent 310 discharged from the fire extinguishing pipe 300. The fire extinguishing agent 310 discharged from the fire extinguishing pipe 300 may be sprayed onto the side surface of the battery cell in which the fire has occurred, and then may fall onto the panel body 231, and may flow along the second guide portion 234 in the width direction (Y) of the panel body 231 to extinguish the bottom surface of the battery cell.

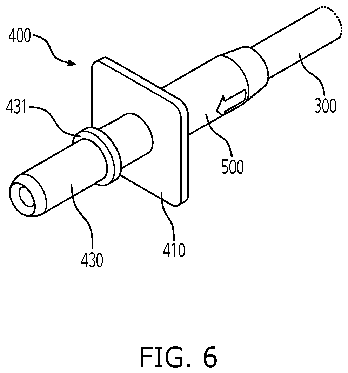

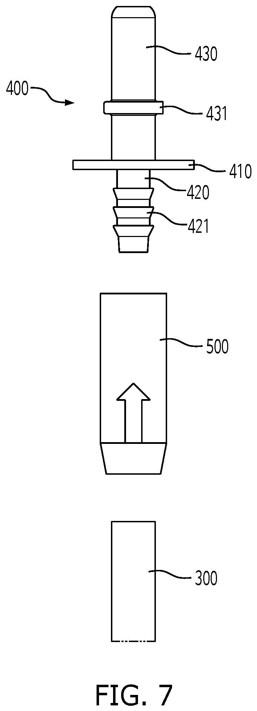

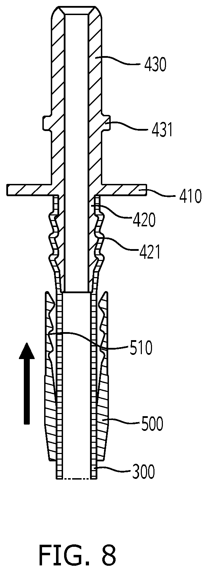

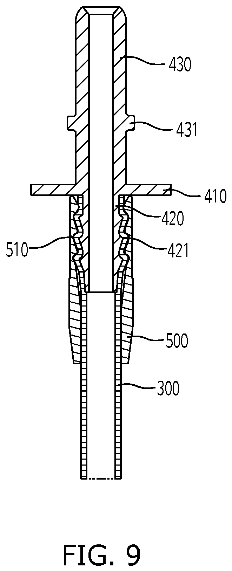

FIG. 6 illustrates a perspective view of an example of a connection portion and a cover portion in an energy storage device according to some embodiments of the present disclosure. FIG. 7 illustrates an exploded top plan view of an example of a connection portion and a cover portion in an energy storage device according to some embodiments of the present disclosure. FIG. 8 and FIG. 9 respectively illustrate an exploded top plan view of an example in which a cover portion is coupled to a connection portion in an energy storage device according to some embodiments of the present disclosure.

Referring to FIG. 6 to FIG. 9, the fire extinguishing pipe 300 may be coupled to the case 200 through the connection portion 400. The connection portion 400 may be coupled to the case 200, one end thereof may be connected to an open side of the fire extinguishing pipe 300, and the other end thereof may be connected to the supply flow path 10 (Fig. 1) for supplying the fire extinguishing agent. The connection portion 400 may include portions that are tubular in shape.

In some embodiments, the connection portion 400 may include a base plate 410 coupled to the case 200, a pipe connection portion 420 extending from the base plate 410 to one side and to which the fire extinguishing pipe 300 is coupled, and a flow path connection portion 430 extending from the base plate 410 to the other side and communicating with the pipe connection portion 420 and to which the supply flow path 10 is connected.

The base plate 410 may be disposed on a pipe coupling portion 211 formed in the case body 210 and coupled to the case body 210 through a coupling member such as a bolt or the like. However, the configuration in which the base plate 410 is coupled to the case body 210 is not limited thereto, and various known coupling configurations such as a hook that is formed and fitted into the case main body 210 or the base plate 410 may be applied.

The flow path connection portion 430 may extend from the base plate 410 to the other side and may internally communicate with the pipe connection portion 420 to supply the fire extinguishing agent supplied from the supply flow path 10 to the pipe connection portion 420.

The flow path connection portion 430 may include a support portion 431 extending radially outward from the outer surface, which the supply flow path 10 is inserted up to, onto or into, and supported by locking. In some embodiments, a one-touch coupler may be provided at the end of the supply flow path 10, and the coupler of the supply flow path 10 may be inserted into the flow path connection portion 430 and then hooked and coupled to the support portion 431. However, the configuration in which the supply flow path 10 and the flow path connection portion 430 are coupled is not limited thereto, and various known coupling configurations may be applied.

The pipe connection portion 420 may extend from the base plate 410 to one side, and may internally communicate with the flow path connection portion 430 to supply the fire extinguishing agent supplied through the flow path connection portion 430 to the fire extinguishing pipe 300.

The pipe connection portion 420 may include a plurality of latching protrusions 421 extending radially outward from the outer surface and formed along the axial direction. In some embodiments, the latching protrusion 421 may be formed to be inclined upward in a direction in which the fire extinguishing pipe 300 is inserted. With this configuration, in a case where the pipe connection portion 420 is inserted into the fire extinguishing pipe 300, the insertion may be easily guided along the inclined surface of the latching protrusion 421 in the direction in which the fire extinguishing pipe 300 is inserted. In some embodiments, after the fire extinguishing pipe 300 is inserted, the fire extinguishing pipe 300 may be supported by being caught on the end of the latching protrusion 421, so that the fire extinguishing pipe 300 is not separated from the pipe connection portion 420.

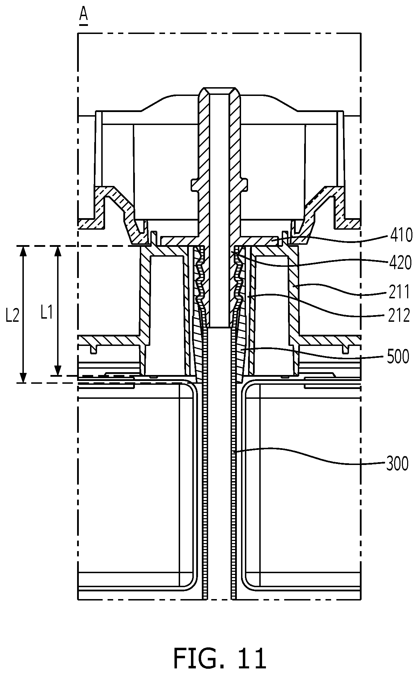

The energy storage device according to some embodiments of the present disclosure may further include a cover portion 500 disposed to surround one side of the fire extinguishing pipe 300 coupled to the pipe connection portion 420. The length L2 (e.g., as described in relation to FIG. 11) of the cover portion 500 may be formed to be longer than the length of the pipe connection portion 420. For example, the cover portion 500 may cover the end of the pipe connection portion 420, which can be most vulnerable to rupture. In some embodiments, a direction in which the cover portion 500 is inserted and then coupled may be displayed on the outer surface of the cover portion 500. In some embodiments, as shown in FIG. 7, an arrow displaying a direction for coupling to the pipe connection portion 420 while the cover portion 500 is inserted into the fire extinguishing pipe 300 may be displayed on the outer surface of the cover portion 500. However, the mark displaying the coupling direction of the cover portion 500 is not limited thereto, and may be formed as any mark that may be easily recognized by the user.

In a case where thermal runaway occurs in a battery cell, the front end of the fire extinguishing pipe 300 connected to the pipe connection portion 420 may be prematurely melted or broken by fragments or flames. The cover portion 500 may cover the front end of the fire extinguishing pipe 300 connected to the pipe connection portion 420, so that it is possible to prevent the front end of the fire extinguishing pipe 300 from being prematurely melted or broken. To this end, the cover portion 500 may have a higher strength than the fire extinguishing pipe 300 and may be made of a flame-retardant material. In some embodiments, the cover portion 500 may be made of a silicon material, for example having a flame-retardant rating of V0 and/or a hardness of 60 Hs to 80 Hs (shore hardness). However, the material of the cover portion 500 is not limited thereto, and various materials may be applied as long as the material is a flame-retardant material having high strength.

The cover portion 500 may further include a plurality of latching grooves 510 recessed radially outward from the inner surface and formed along the axial direction. The latching groove 510 may be formed to have a shape corresponding to the latching protrusion 421 (e.g., a respective latching protrusion) on the pipe connection portion 420.

With this configuration, as illustrated in FIG. 8, after pre-inserting the cover portion 500 onto the fire extinguishing pipe 300, the fire extinguishing pipe 300 may be inserted into the pipe connection portion 420 to be inserted and fitted. The fire extinguishing pipe 300 may be made of a material having elasticity and may be coupled in a shape corresponding to the shape of the latching protrusion 421 formed in the pipe connection portion 420. In a case where the cover portion 500 is moved in the direction of the pipe connection portion 420, as shown in FIG. 9, the latching groove 510 formed on the inner surface of the cover portion 500 may be caught and supported by the latching protrusion 421 with the fire extinguishing pipe 300 therebetween.

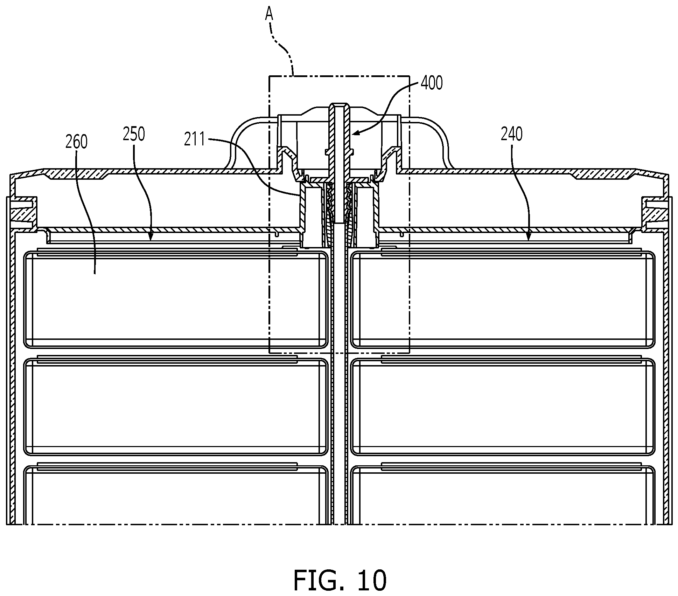

FIG. 10 illustrates a partial cross-sectional view of an example of an energy storage device according to some embodiments of the present disclosure. FIG. 11 illustrates an enlarged view of an example of area A of FIG. 10.

Referring to FIG. 10 and FIG. 11, a pipe coupling portion 211 may be formed on one side of the case body 210, and an insertion hole 212 penetrating the center of the pipe coupling portion 211 may be formed. The other side of the fire extinguishing pipe 300 is first inserted through the insertion hole 212 of the pipe coupling portion 211, and in a case where the insertion of the fire extinguishing pipe 300 is completed, the base plate 410 of the connection portion 400 may be in close contact with the pipe coupling portion 211. The base plate 410 may be coupled to the pipe coupling portion 211 through a coupling member such as a bolt. The pipe connection portion 420 may be inserted into the pipe coupling portion 211.

Herein, the cover portion 500 may cover (e.g., to surround) the front end of the fire extinguishing pipe 300 inserted into the pipe connection portion 420. The length L2 of the cover portion 500 may be formed to be the same as the length L1 of the insertion hole 212 of the pipe coupling portion 211 or longer than the length L1 of the insertion hole 212 of the pipe coupling portion 211, in the direction in which the pipe connection portion 420 is inserted into the insertion hole 212. Accordingly, it is possible to prevent the fire extinguishing pipe 300 from being broken inside the pipe coupling portion 211.

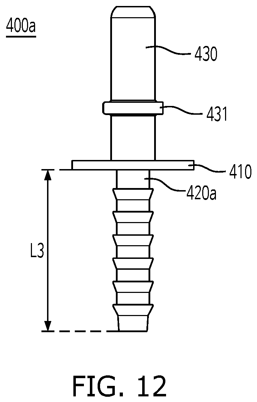

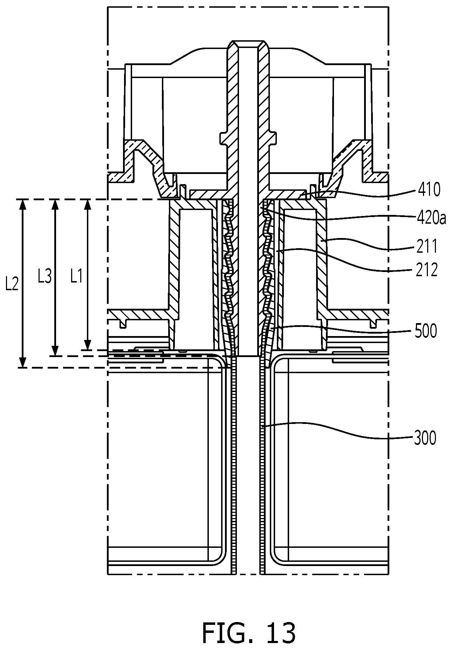

FIG. 12 illustrates a top plan view of another example of a connection portion in an energy storage device according to some embodiments of the present disclosure. FIG. 13 illustrates an enlarged view of an example of a state in which the connection portion of FIG. 12 is installed.

Referring to FIG. 12 and FIG. 13, in another example according to some embodiments, a connection portion 400a may be formed such that a length L3 of a pipe connection portion 420a may be longer than the length of the pipe connection portion 420 of the connection portion 400 disclosed in FIG. 7.

The length L3 of the pipe connection portion 420a may be formed to be equal to the length L1 of the insertion hole 212 of the pipe coupling portion 211 or to be longer than the length L1 of the insertion hole 212 of the pipe coupling portion 211, in the direction in which the pipe connection portion 420a is inserted into the insertion hole 212. Accordingly, because the fire extinguishing pipe 300 is coupled to the pipe connection portion 420a inside the pipe coupling portion 211, the coupling force between the fire extinguishing pipe 300 and the pipe connection portion 420a may be improved. In some embodiments, the length L2 of the cover portion 500 may be formed to be longer than the length L3 of the pipe connection portion 420a. Accordingly, it is possible to prevent the fire extinguishing pipe 300 from being broken inside the pipe coupling portion 211.

Although the present disclosure has been described with reference to embodiments and drawings illustrating aspects thereof, the present disclosure is not limited thereto. Various modifications and variations can be made by a person skilled in the art to which the present disclosure belongs within the scope of the technical disclosure and the claims and their equivalents, below.

## Claims

1. An energy storage device comprising:
one or more battery modules comprising a plurality of battery cells;
a case accommodating the one or more battery modules;
a fire extinguishing pipe that is disposed in the case, has one side open to accommodate a fire extinguishing agent therein, and is configured to melt at a certain temperature or higher to spray the fire extinguishing agent; and
a connection portion that is coupled to the case, has one end connected to the one side of the fire extinguishing pipe, and has another end connected to a supply flow path for supplying the fire extinguishing agent.

2. The energy storage device as claimed in claim 1, wherein the connection portion comprises:
a base plate coupled to the case;
a pipe connection portion extending from the base plate to one side and to which the fire extinguishing pipe is coupled; and
a flow path connection portion that extends from the base plate to another side and communicates with the pipe connection portion and to which the supply flow path is connected.

3. The energy storage device as claimed in claim 2, wherein the pipe connection portion comprises a plurality of latching protrusions extending radially outward from an outer surface thereof and formed along an axial direction.

4. The energy storage device as claimed in claim 2 or claim 3, further comprising a cover portion disposed to surround a side of the fire extinguishing pipe coupled to the pipe connection portion.

5. The energy storage device as claimed in claim 4, wherein the cover portion comprises a plurality of latching grooves that are recessed radially outward from an inner surface thereof and are formed along an axial direction, and optionally when dependent upon claim 3, are supported by the respective latching protrusions with the fire extinguishing pipe interposed therebetween.

6. The energy storage device as claimed in claim 4 or claim 5, wherein a length of the cover portion is longer than that of the pipe connection portion.

7. The energy storage device as claimed in any one of claims 4 to 6, wherein the case comprises a pipe coupling portion into which the pipe connection portion is inserted and to which the base plate is coupled.

8. The energy storage device as claimed in claim 7, wherein a length of the cover portion is equal to or longer than that of the pipe coupling portion, in a direction in which the pipe connection portion is inserted.

9. The energy storage device as claimed in claim 7 or claim 8, wherein a length of the pipe connection portion is equal to or longer than that of the pipe coupling portion, in a direction in which the pipe connection portion is inserted.

10. The energy storage device as claimed in any one of claims 4 to 9, wherein the cover portion has a higher strength than the fire extinguishing pipe and is made of a flame-retardant material.

11. The energy storage device as claimed in any one of claims 2 to 10, wherein the flow path connection portion comprises a support portion that extends radially outward from an outer surface thereof and up to, onto or into which the supply flow path is inserted to be supported.

12. The energy storage device as claimed in any one of the preceding claims, further comprising a front thermal insulation sheet disposed between adjacent battery cells among the plurality of battery cells.

13. The energy storage device as claimed in any one of the preceding claims, wherein:
the one or more battery modules comprise a first battery module and a second battery module,
the first battery module and the second battery module are disposed adjacent to each other in a width direction of the case, and
the fire extinguishing pipe is disposed between the first and second battery modules.

14. The energy storage device as claimed in claim 13, further comprising:
a first side thermal insulation sheet disposed between the first battery module and the fire extinguishing pipe; and
a second side thermal insulation sheet disposed between the second battery module and the fire extinguishing pipe.

15. The energy storage device as claimed in claim 13 or claim 14, further comprising a thermal insulation portion disposed between the first battery module and the second battery module.
